# FASCICULE DE BREVET EUROPEEN

(11) **EP 2 950 256 B1**
(45) Date de publication et mention de la délivrance du brevet: **01.04.2026**
(21) Numéro de dépôt: 15169497.3
(22) Date de dépôt: 27.05.2015
(51) Int. Cl.: G06Q 20/40, G07C 9/00, G07C 9/29, G07C 9/33

(54) **MÉTHODE D'IDENTIFICATION, DISPOSITIF ET PROGRAMME CORRESPONDANT**
IDENTIFIZIERUNGSVERFAHREN, ENTSPRECHENDE VORRICHTUNG UND ENTSPRECHENDES PROGRAMM
IDENTIFICATION METHOD, DEVICE AND CORRESPONDING PROGRAM

(30) Priorité: 28.05.2014 FR 1454863
(43) Date de publication de la demande: 02.12.2015
(73) Titulaire: Banks and Acquirers International Holding, 75015 Paris (FR)
(72) Inventeur: Leger, Michel, 78100 Saint Germain en Laye (FR)
(74) Mandataire: LLR

(56) Documents cités:
- WO-A1-2014/093390
- US-A- 5 614 703
- US-A1- 2001 034 723
- US-A1- 2012 143 768
- US-A1- 2013 147 603

## Description

### 1. Domaine de l'invention

L'invention se rapporte au domaine de l'identification.

Plus particulièrement, l'invention se rapporte à l'identification d'individus par l'intermédiaire d'un élément d'identification. Un tel élément d'identification, dans le cadre de l'invention, s'entend comme une carte de paiement, une carte de crédit ou une carte de paiement. De telles cartes sont largement présentes et utilisées par de nombreuses personnes de part de monde afin de réaliser des opérations de paiement. Elles sont généralement distribuées par des établissements bancaires ou des prestataires de services de paiement. Une carte est généralement délivrée à un titulaire. Il s'agit en règle générale du client de la banque. Ce titulaire, client de la banque ou du prestataire de service de paiement, reçoit également un code d'identification personnel qu'il peut ou doit utiliser avec la carte de paiement (en fonction des contraintes d'autorisation et/ou du pays dans lequel la carte est utilisée). Ces cartes sont délivrées à l'issu d'un examen relativement minutieux de l'identité du demandeur (par exemple le client de la banque) : fourniture de pièce d'identité, de justificatifs de domicile, etc.

### 2. Art Antérieur

On fait la différence, dans la présente, entre les systèmes d'identification (pour obtenir une vérification d'identité) et les systèmes d'authentification (qui certifient l'identité). En effet, une vérification d'une identité ne met pas en œuvre les mêmes techniques qu'une authentification d'une identité : l'authentification est généralement forte alors que l'identification est comparativement relativement faible.

Il existe de nombreuses situations dans lesquelles il est nécessaire d'identifier une personne ou un individu. Une situation commune consiste par exemple à décliner son identité lorsque l'on se rend à un rendez-vous. En règle générale, le fait de décliner son identité n'est une preuve d'identité très forte et ce type d'identification n'est en pratique utilisé que dans des cas où l'identification ne revêt pas une importance très forte. Il en va différemment par exemple pour l'accès à un site protégé ou l'accès à des données sensibles. C'est par exemple le cas dans une entreprise. L'accès aux locaux d'une entreprise est en général limité à un nombre de personnes restreint. Ce sont par exemple les employés de l'entreprise et dans une moindre mesure aux clients et fournisseurs de l'entreprise. Souvent les employés sont identifiés à l'aide d'un badge qui sert de clés

d'accès aux locaux de l'entreprise. Les clients et fournisseurs, quant à eux, doivent se présenter à l'accueil de l'entreprise et fournir une pièce d'identité.

En tant que telle, la vérification de la pièce d'identité d'une personne ne peut être réalisée que par l'intermédiaire d'une personne physique, chargée de vérifier l'identité des personnes. Dans les situations où une personne physique n'est pas dédiée à la vérification de l'identité, des systèmes automatisés sont mis en œuvre (code d'accès à saisir sur un clavier, lecteurs de badges,...). Les systèmes d'identification automatisés sont nombreux et souvent chers.

Lorsqu'il s'agit de réaliser une authentification, des systèmes existent et sont encore plus chers. Ils mettent souvent en œuvre une reconnaissance biométrique (empreinte digitale par exemple). De tels systèmes sont réservés à un accès à des locaux extrêmement sensibles ou à des données ou des dispositifs du même type.

La demande de brevet américain US2012/143768 propose une méthode qui permet d'autoriser un dispositif mobile à effectuer des paiements de type « carte présente ». Cependant, cette méthode ne permet pas d'identifier un utilisateur attendu pour l'accès à un bien ou un service. Une autre demande de brevet américain US5614703 propose un système d'enregistrement pour les hôtels. Avec ce système, un utilisateur peut s'enregistrer dans un hôtel avec sa carte bancaire et utiliser cette carte bancaire comme une « clé » pour ouvrir sa chambre. En effet, le système déverrouille la porte de la chambre lorsque l'identifiant d'une carte présentée correspondant à celui enregistré dans le système. Par conséquent, avec le système proposé, une carte bancaire non valable ou volée peut encore être utilisée dans le système : ceci ne permet pas d'identifier l'utilisateur pour l'accès à un bien ou à un service.

### 3. Résumé de l'invention

L'invention ne pose pas ces problèmes de l'art antérieur. Plus particulièrement l'invention offre une solution simple et peu couteuse pour permettre l'accès à des biens ou services tout en utilisant une architecture d'identification existante. L'invention se rapporte à un procédé d'identification d'un utilisateur pour l'accès à un bien ou un service, c'est-à-dire pour l'accès à un site protégé ou l'accès à des données sensibles. Selon l'invention un tel procédé comprend :
- une étape de présentation à un terminal, par l'utilisateur à identifier, d'une carte de paiement ;
- une étape d'exécution, par le terminal, d'une transaction de paiement dont le montant est nul, comprenant une transaction en ligne, c'est-à-dire en requérant une autorisation auprès d'un serveur, dans laquelle le quatrième bit du quatrième octet des "résultats de vérifications du terminal" du protocole EMV est positionné à 1, afin de forcer une transaction en ligne ;
- lorsque ladite transaction de paiement est exécutée sans erreur, une étape de délivrance d'une assertion d'identification entrainant l'accès au bien ou au service.

Ainsi, la technique proposée permet d'autoriser un accès à un bien ou un service à partir d'une carte de paiement existante, appartenant à l'utilisateur. Cette technique évite de recourir à la fabrication de nouvelles cartes pour gérer ces accès.

Selon une caractéristique particulière, l'étape d'exécution d'une transaction de paiement de montant nul est adaptée, en types de contrôles réalisés conjointement entre la carte de paiement et le terminal, en fonction d'un degré de sensibilité d'accès.

Ainsi, l'application qui est implémentée au sein du terminal, qui est sensiblement identique à une application de paiement, est adaptée à la sensibilité des informations ou des biens ou des services auxquels il est nécessaire d'accéder, et ce, sans qu'il soit nécessaire de prévoir une modification physique du terminal.

Selon un mode de réalisation particulier, l'étape d'exécution d'une transaction de paiement de montant nul comprend une étape de saisie, par ledit utilisateur, d'un code d'identification personnel sur un clavier du terminal.

Ainsi, l'utilisateur ne peut pas répudier son accès au bien ou au service : en effet, la saisie du code d'identification personnel apporte une quasi-certitude de l'identification de l'utilisateur.

Selon une caractéristique particulière, l'étape d'exécution d'une transaction de paiement de montant nul comprend une étape de transmission d'une requête d'autorisation à un serveur connecté audit terminal par l'intermédiaire d'un réseau de communication.

Ainsi, bien que d'un montant nul, cette transaction fait l'objet d'une acceptation en ligne par l'intermédiaire d'un serveur en charge, assurant de ce fait que la carte n'a pas été déclarée comme étant volée.

L'invention se rapporte également, dans au moins un mode de réalisation, à un dispositif d'identification d'un utilisateur pour l'accès à un bien ou un service, c'est-à-dire pour l'accès à un site protégé ou l'accès à des données sensibles. Selon une caractéristique particulière un tel dispositif comprend :
- des moyens de présentation, par l'utilisateur à identifier, d'une carte de paiement ;
- des moyens d'exécution, d'une transaction de paiement dont le montant est nul, comprenant une transaction en ligne, c'est-à-dire en requérant une autorisation auprès d'un serveur, dans laquelle le quatrième bit du quatrième octet des "résultats de vérifications du terminal" du protocole EMV est positionné à 1, afin de forcer une transaction en ligne ;
- des moyens de délivrance d'une assertion d'identification entrainant l'accès au bien ou au service.

Un tel dispositif se présente bien entendu, dans sa forme la plus commune, comme un terminal. Un tel terminal tire avantage d'une infrastructure existante, qui est l'infrastructure formant le système interbancaire de paiement par carte. Le terminal peut avantageusement être connecté à un tel système afin de pouvoir mettre en œuvre au moins certaines des étapes du procédé proposé par ailleurs.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une architecture sur laquelle se base la technique proposée ;
- la figure 2 présente un synoptique de la technique proposée;
- la figure 3 décrit un dispositif de mise en œuvre de la technique proposée.

### 5. Description

### 5.1. Rappels

Le principe général de la technique proposée repose sur l'utilisation d'un terminal de paiement à des fins d'identification. Plus particulièrement, la technique proposée consiste à utiliser l'architecture générale du système de paiement par carte de paiement à des fins d'identification.

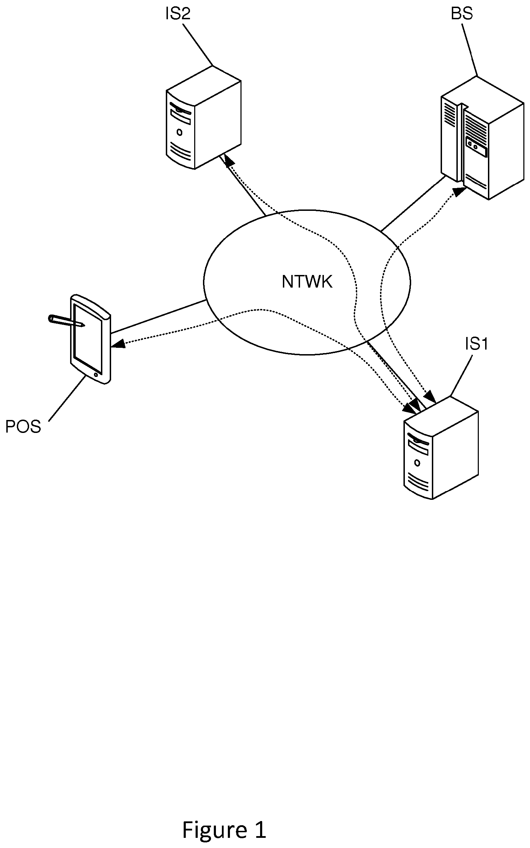

On décrit, en relation avec la figure 1, une architecture d'un système de paiement tel qu'implémenté à l'heure actuelle. Un tel système (S1) comprend au moins un terminal de paiement (POS) (un seul terminal représenté sur la figure), un serveur bancaire (BS)(ou un serveur de prestataire de services de paiements). Ce terminal de paiement (POS) et ce serveur bancaire (BS) sont connectés d'une part par l'intermédiaire d'un réseau de communication (NTWK) (soit un réseau sans fils de type 3G, soit un réseau filaire) et éventuelle par un premier serveur intermédiaire (IS1).

En fonction des systèmes, le terminal de paiement n'est pas directement connecté au serveur bancaire. Il est par exemple connecté à un serveur intermédiaire, qui fait office de proxy/tampon/accréditeur (ce serveur intermédiaire peut être le serveur bancaire correspondant à la banque du commerçant). Le serveur intermédiaire (IS1) peut être lui-même connecté à au moins un autre serveur intermédiaire (IS2), qui est par exemple le serveur correspondant à l'organisme émetteur de la carte de paiement (Visa, Mastercard, American Express, etc.). Ce sont alors ces serveurs intermédiaires de seconde ligne qui sont connectés à des serveurs bancaires. Le serveur intermédiaire (IS1) peut être directement connecté aux autres serveurs bancaires (des autres banques et/ou fournisseurs de services de paiement).

Lorsqu'une transaction doit être réalisée à partir du terminal de paiement (POS), le terminal de paiement (POS) se connecte par exemple au premier serveur intermédiaire (IS1), notamment lorsqu'il est nécessaire de requérir une autorisation de paiement. En fonction du montant de la transaction, le serveur intermédiaire (IS1) peut fournir lui-même l'autorisation nécessaire ou requérir lune autorisation auprès d'un autre serveur. Le serveur intermédiaire (IS1) sélectionne, parmi l'ensemble des serveurs auquel il a accès (IS2, BS, etc.), le serveur idoine en fonction de la carte de paiement (CB) qui est présentée dans le terminal de paiement (POS) et requiert une autorisation auprès de ce serveur. Bien entendu, ces transmissions sont chiffrées à l'aide de matériels cryptographiques distribués entre les différents intervenants afin de garantir l'absence de fraudes et l'authenticité des informations échangées.

Par ailleurs, un ensemble de protocoles, appelés « EMV » est mis en œuvre afin d'obtenir, de la part de la carte de paiement, des données nécessaires à la transaction. La technique proposée se base sur cette architecture

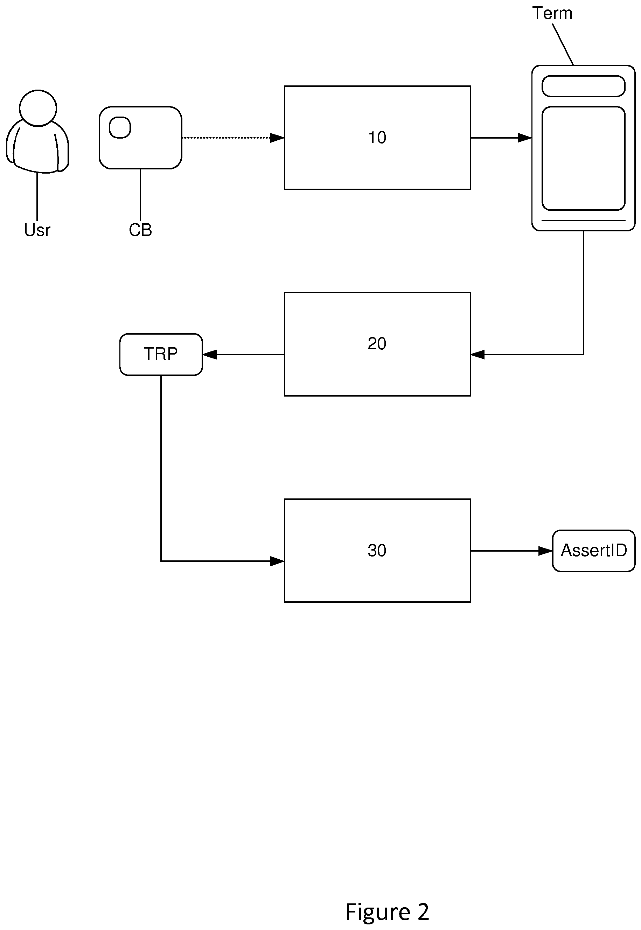

La technique proposée, décrite en relation avec la figure 2, comprend les étapes suivantes :
- une étape de présentation (10) à un terminal (Term), par l'utilisateur à identifier (Usr), d'une carte de paiement (CB) ;
- une étape d'exécution (20), par le terminal (Term), d'une transaction de paiement (TrP) dont le montant est nul ;
- lorsque ladite transaction de paiement est exécutée sans erreur, une étape de délivrance (30) d'une assertion d'identification (AssertID) entrainant l'accès au bien ou au service.

La présentation de la carte de paiement peut consister en l'insertion de celle-ci dans un lecteur de carte de paiement ou encore en l'utilisation d'un mode de communication sans contact avec la carte de paiement (NFC) ou autre méthode de présentation d'une carte de paiement. Plus particulièrement, au moins deux modes de réalisation de la technique proposée peuvent être implémentés. Un premier mode de réalisation consiste à effectuer une identification d'un utilisateur en générant une transaction fictive avec un montant nul (0€). La mise en œuvre d'une telle transaction, qui est simple, permet de s'assurer que l'utilisateur de la carte de paiement, sur lequel est inscrit le nom du porteur est en possession de l'information relative au code d'identification personnel nécessaire à la validation de la transaction (lorsque le code d'identification personnel est utilisé). A priori donc, lorsque le code d'identification personnel est correct, l'utilisateur de la carte de paiement est supposé être la personne qu'il prétend.

Lorsqu'il n'est pas nécessaire de saisir le code d'identification personnel, seule la validité de la carte est assurée. Cette variante est particulièrement bien adaptée par exemple pour remplacer l'utilisation de cartes magnétiques, de cartes RFID ou de codes temporaires. En effet, par exemple pour accéder à une chambre d'hôtel, il est fréquent que celui-ci fournisse une carte magnétique au client. Cette carte est enfichée dans un lecteur présent sur la porte de la chambre et permet l'ouverture de celle-ci. À l'aide de la technique de l'invention, il n'est pas nécessaire d'utiliser une carte supplémentaire : la carte de paiement de l'utilisateur est utilisée en lieu et place de la carte magnétique pour permettre l'accès à la chambre. Lors de l'insertion de la carte, une transaction bancaire dont le montant est égal à zéro euro est construite par le lecteur de carte (par exemple intégrée à la porte de la chambre d'hôtel). Cette transaction est transmise soit au premier serveur intermédiaire soit au deuxième serveur intermédiaire. Celui-ci valide la transaction et transmet en retour une donnée représentative de la validation au terminal. Lorsque celui-ci reçoit la validation, il autorise l'action demandée (par exemple ouvrir la porte). Alternativement, le terminal ne requiert aucune validation : une transaction avec un montant nul est construite. Lorsqu'il est possible de construire cette transaction (c'est à dire lorsque le terminal se trouve en présence d'une carte de paiement ou de crédit valide), alors le simple fait de pouvoir construire la transaction permet l'accès au produit ou au service souhaité. Bien entendu, en sus de la construction de cette transaction, le terminal vérifie que l'identifiant de la carte de paiement correspond à un identifiant attendu (l'identifiant étant par exemple le numéro de la carte de paiement). Si on se réfère à un accès à une chambre d'hôtel par exemple, on note que cet identifiant est nécessairement connu; en effet, pour pouvoir régler la chambre d'hôtel, l'utilisateur doit présenter une carte de paiement ou une carte de crédit valide à la réception de celui-ci : le numéro de la carte de paiement est donc déjà connu. Ainsi, dans ce mode de réalisation, on simplifie grandement le système de gestion de chambres de l'hôtel puisqu'il n'est pas nécessaire de disposer d'un système complémentaire d'éditions de carte magnétiques d'accès. Ce mode de réalisation est bien entendu dérivable à d'autres types d'accès à des biens ou des services.

Lorsqu'il est nécessaire de saisir le code d'identification personnel, une sécurisation supplémentaire est apportée par rapport aux systèmes existants : en effet, on vérifie alors que l'accès au bien ou au service n'est possible qu'au porteur de la carte qui dispose également du code d'identification personnel de cette carte. Ceci est intéressant dans le cas où l'accès au bien ou service doit être contrôlé de manière forte. Par exemple, ce type de fonctionnement peut être adapté à un dispositif de retrait de courrier en recommandé, qui peut être mis en place dans les postes. L'utilisateur qui reçoit un avis indiquant la disponibilité d'un courrier recommandé peut dès lors se rendre à la poste et utiliser un dispositif robotisé permettant de reconnaitre le porteur de carte de paiement, identifier le courrier recommandé en attente pour ce porteur, requérir, par l'intermédiaire du terminal, la saisie du code d'identification personnel et effectuer une transaction avec un montant nul. Lorsque le terminal reçoit l'autorisation du serveur, il donne l'ordre au dispositif robotisé de délivrer le courrier recommandé à l'utilisateur. Dès lors, il devient possible d'obtenir des biens et services de manière beaucoup plus sûre et rapide qu'auparavant. Plus particulièrement, la présente technique peut être mise en œuvre dans des situations d'accès à des biens et/ou services de manière non surveillée (en anglais "unatended"). Il s'agit de tout type de distributeur pour lequel une identification ou une authentification d'un utilisateur (ou d'un client) est nécessaire, sans toutefois qu'une transaction financière soit nécessaire : accès à une place de parking, ouverture d'une porte, accès à un lieu de travail, etc.

Dans un autre mode de réalisation, complémentaire des modes de réalisation préalablement présentés, une transaction est réalisée avec chaque utilisation de la carte de paiement pour effectuer une opération d'identification. Comme explicité préalablement, dans un mode de réalisation de base, la transaction a un montant fixé à 0. De plus, dans ce mode de réalisation de base la transaction comprend également l'identité du "marchand", c'est à dire du fournisseur d'accès à la chose ou au service. Dans l'exemple de l'hôtel, il s'agit du nom de l'hôtel. La transaction comprend également un libellé, construit en fonction de l'action réalisée. Dans l'exemple de l'hôtel, il s'agit par exemple de l'heure d'utilisation.

Dans ce mode de réalisation, bien qu'il se présente comme un mode de réalisation de base, une subtilité est introduite au niveau de l'application qui gère les transactions d'identification/authentification (application installée au sein du terminal). On rappelle que le principe de l'invention consiste à utiliser une architecture d'un système général de paiement pour réaliser des identifications/authentifications. En fonction de la situation, et plus particulièrement en fonction de ce à quoi on souhaite offrir l'accès à l'aide de la carte de paiement, l'application installée au sein du terminal ne fonctionnera pas forcement de la même manière. Ainsi, dans le cas d'un accès « simple » la transaction peut être conduite sans nécessiter d'autorisation auprès d'un serveur (transaction hors ligne) : c'est par exemple le cas de l'accès à une chambre d'hôtel. Dans ce cas, la phase de gestion de risque du côté du terminal n'est pas mise en œuvre. Le bit idoine des « résultats de vérifications du terminal » du protocole EMV est positionné à 0.

Dans le cas d'un accès « sensible » (c'est-à-dire que les biens ou services auquel on souhaite accéder sont considérés comme sensible, comme par exemple le courrier en recommandé), la transaction est toujours conduite « en ligne », c'est-à-dire en requérant une autorisation auprès d'un serveur (par exemple un serveur bancaire). Dans ce cas, le bit 4 de l'octet 4 des « résultats de vérifications du terminal » du protocole EMV est positionné à 1, afin de forcer une transaction en ligne.

De manière corolaire, le fait de générer une transaction permet à l'utilisateur de disposer, sur son relevé de compte, de l'ensemble des utilisations de sa carte de paiement, que ce soit pour réaliser un paiement ou pour obtenir un accès à un bien ou un service. Dès lors, le relevé de compte se transforme en un relevé d'actions.

Dans un mode de réalisation plus complexe, le terminal de paiement est utilisé non pas pour permettre un accès à un bien ou un service, mais pour réaliser une authentification d'une action du titulaire de la carte de paiement. Dans un tel mode de réalisation, la transaction réalisée par le terminal de paiement représente une chose identifiée. Il s'agit par exemple d'une donnée.

### 5.2. Autres caractéristiques et avantages

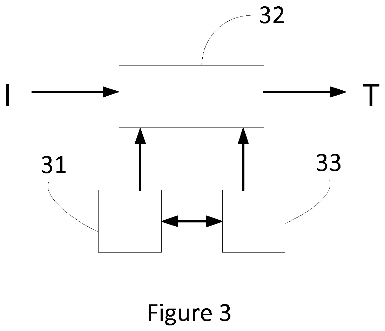

On décrit, en relation avec la figure 3, un dispositif mis en œuvre pour identifier un utilisateur, selon le procédé décrit préalablement.

Par exemple, le dispositif comprend une mémoire 31 constituée d'une mémoire tampon, une unité de traitement 32, équipée par exemple d'un microprocesseur, et pilotée par le programme d'ordinateur 33, mettant en œuvre un procédé d'identification.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée une donnée d'activation (par exemple un appui sur un bouton ou une commande d'activation numérique). Le microprocesseur de l'unité de traitement 32 met en œuvre les étapes du procédé d'identification, selon les instructions du programme d'ordinateur 33 pour requérir la présentation d'une carte de paiement (soit par insertion dans un lecteur de cartes, soit par transmission sans contact), pour effectuer une transaction financière d'un montant nul et pour délivrer une assertion d'identification lorsque cette transaction est exécutée correctement.

Pour cela, le dispositif comprend, outre la mémoire tampon 31, des moyens de communications, tels que des modules de communication réseau, des moyens de transmission de donnée et un processeur de chiffrement.

Ces moyens peuvent se présenter sous la forme d'un processeur particulier implémenté au sein du dispositif, ledit processeur étant un processeur sécurisé. Selon un mode de réalisation particulier, ce dispositif met en œuvre une application particulière qui est en charge de la réalisation des transactions, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le dispositif comprend en outre les moyens d'autorisation d'accès à un bien ou un service comme des moyens de déclenchement d'ouverture (portes par exemple). Ces différents moyens se présentent également comme des interfaces de communications permettant d'échanger des données sur des réseaux de communication, des moyens d'interrogations et de mise à jour de base de données, ...

## Revendications

1. Procédé d'identification d'un utilisateur pour l'accès à un bien ou un service, c'est-à-dire pour l'accès à un site protégé ou l'accès à des données sensibles, procédé comprenant :
- une étape de présentation à un terminal, par l'utilisateur à identifier, d'une carte de paiement ;
- une étape de vérification qu'un identifiant de ladite carte de paiement correspond à un identifiant attendu connu par ledit terminal ;
le procédé étant **caractérisé en ce qu'**il comprend, lorsque ledit identifiant de ladite carte de paiement est reconnu :
- une étape d'exécution, par le terminal, d'une transaction de paiement dont le montant est nul, comprenant une transaction en ligne, c'est-à-dire en requérant une autorisation auprès d'un serveur, dans laquelle le quatrième bit du quatrième octet des "résultats de vérifications du terminal" du protocole EMV est positionné à 1, afin de forcer une transaction en ligne ; et
- lorsque ladite transaction de paiement est exécutée sans erreur, une étape de délivrance d'une assertion d'identification entrainant l'accès au bien ou au service.

2. Procédé d'identification selon la revendication 1, **caractérisé en ce que** l'étape d'exécution d'une transaction de paiement de montant nul est adaptée, en types de contrôles réalisés conjointement entre la carte de paiement et le terminal, en fonction d'un degré de sensibilité d'accès.

3. Procédé d'identification selon la revendication 1, **caractérisé en ce que** l'étape d'exécution d'une transaction de paiement de montant nul comprend une étape de saisie, par ledit utilisateur, d'un code d'identification personnel sur un clavier du terminal.

4. Procédé d'identification selon la revendication 1, **caractérisé en ce que** l'étape d'exécution d'une transaction de paiement de montant nul comprend une étape de transmission d'une requête d'autorisation à un serveur connecté audit terminal par l'intermédiaire d'un réseau de communication.

5. Dispositif d'identification d'un utilisateur pour l'accès à un bien ou un service, c'est-à-dire pour l'accès à un site protégé ou l'accès à des données sensibles, dispositif **caractérisé en ce qu'**il comprend :
- des moyens de présentation, par l'utilisateur à identifier, d'une carte de paiement ;
- des moyens de vérification qu'un identifiant de ladite carte de paiement correspond à un identifiant attendu connu par ledit terminal ;
- des moyens d'exécution d'une transaction de paiement dont le montant est nul, comprenant des moyens d'exécution d'une transaction en ligne, c'est-à-dire en requérant une autorisation auprès d'un serveur, dans laquelle le quatrième bit du quatrième octet des "résultats de vérifications du terminal" du protocole EMV est positionné à 1, afin de forcer une transaction en ligne ;
- des moyens de délivrance d'une assertion d'identification entrainant l'accès au bien ou au service.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'identification selon la revendication 1, lorsqu'il est exécuté sur un ordinateur.

## Patentansprüche

1. Verfahren zur Identifizierung eines Benutzers für den Zugang zu einer Ware oder Dienstleistung, d. h. für den Zugang zu einer geschützten Website oder zu sensiblen Daten, wobei das Verfahren umfasst:
- einen Schritt, bei dem der zu identifizierende Benutzer eine Zahlungskarte an einem Terminal vorlegt;
- einen Schritt, bei dem überprüft wird, ob eine Kennung der genannten Zahlungskarte mit einer erwarteten Kennung übereinstimmt, die dem genannten Terminal bekannt ist;
wobei das Verfahren **dadurch gekennzeichnet ist, dass** es, wenn die genannte Kennung der genannten Zahlungskarte anerkannt wird, umfasst:
- einen Schritt, bei dem das Terminal eine Zahlungstransaktion durchführt, bei der der Betrag Null ist, einschließlich einer Online-Transaktion, d. h. durch Anforderung einer Autorisierung bei einem Server, wobei das vierte Bit des vierten Bytes der "Terminalüberprüfungsergebnisse" des EMV-Protokolls auf 1 gesetzt wird, um eine Online-Transaktion zu erzwingen; und
- wenn die genannte Zahlungstransaktion fehlerfrei ausgeführt wird, einen Schritt der Ausstellung einer Identifikationsbestätigung, die den Zugang zu der Ware oder Dienstleistung ermöglicht.

2. Identifizierungsverfahren nach Anspruch 1, **dadurch gekennzeichnet, dass** der Schritt der Ausführung einer Zahlungstransaktion mit Nullbetrag in Bezug auf die Arten der gemeinsam zwischen der Zahlungskarte und dem Terminal durchgeführten Kontrollen an einen Zugangsempfindlichkeitsgrad angepasst ist.

3. Identifizierungsverfahren nach Anspruch 1, **dadurch gekennzeichnet, dass** der Schritt der Ausführung einer Zahlungstransaktion mit Nullbetrag einen Schritt der Eingabe eines persönlichen Identifizierungscodes durch den Benutzer über eine Tastatur des Terminals umfasst.

4. Identifizierungsverfahren nach Anspruch 1, **dadurch gekennzeichnet, dass** der Schritt der Ausführung einer Zahlungstransaktion mit Nullbetrag einen Schritt der Übermittlung einer Autorisierungsanfrage an einen mit dem Terminal über ein Kommunikationsnetzwerk verbundenen Server umfasst.

5. Vorrichtung zur Identifizierung eines Benutzers für den Zugang zu einer Ware oder Dienstleistung, d. h. für den Zugang zu einem geschützten Standort oder zu sensiblen Daten, wobei die Vorrichtung **dadurch gekennzeichnet ist, dass** sie aufweist:
- Mittel zur Vorlage einer Zahlungskarte durch den zu identifizierenden Benutzer;
- Mittel zur Überprüfung, ob eine Kennung der genannten Zahlungskarte mit einer erwarteten, dem genannten Terminal bekannten Kennung übereinstimmt;
- Mittel zur Durchführung einer Zahlungstransaktion, bei der der Betrag Null ist, einschließlich Mitteln zur Durchführung einer Online-Transaktion, d. h. durch Anforderung einer Autorisierung bei einem Server, wobei das vierte Bit des vierten Bytes der "Terminalüberprüfungsergebnisse" des EMV-Protokolls auf 1 gesetzt wird, um eine Online-Transaktion zu erzwingen;
- Mittel zur Ausgabe einer Identifikationsbestätigung, die den Zugang zu der Ware oder Dienstleistung ermöglicht.

6. Computerprogrammprodukt, das aus einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodeanweisungen zur Ausführung eines Identifizierungsverfahrens gemäß Anspruch 1 enthält, wenn es auf einem Computer ausgeführt wird.

## Claims

1. Identification method of a user for access to a good or service, i.e. for access to a protected site or access to sensitive data, the method comprising:
- a step of presenting, to a terminal, by the user to be identified, a payment card;
- a step of verifying that an identifier of said payment card corresponds to an expected identifier known by said terminal;
the method being **characterized in that** it comprises, when said identifier of said payment card is recognized:
- a step of executing, by the terminal, a payment transaction whose amount is zero, comprising an online transaction, that is to say by requesting authorization from a server, in which the fourth bit of the fourth byte of the "Terminal Verification Results" of the EMV protocol is set to 1, in order to force an online transaction; and
- when said payment transaction is executed without error, a step of issuing an identification assertion resulting in access to the good or the service.

2. Identification method according to claim 1, **characterized in that** the step of executing a payment transaction of zero amount is adapted, in terms of the types of checks carried out jointly between the payment card and the terminal, according to a level of access sensitivity.

3. Identification method according to claim 1, **characterized in that** the step of executing a payment transaction of zero amount comprises a step of entering, by said user, a personal identification code on a keypad of the terminal.

4. Identification method according to claim 1, **characterized in that** the step of executing a payment transaction of zero amount comprises a step of transmitting an authorization request to a server connected to said terminal via a communication network.

5. Device for identifying a user for access to a good or a service, that is to say for access to a protected site or access to sensitive data, the device being **characterized in that** it comprises:
• means for presenting, by the user to be identified, a payment card;
• means for verifying that an identifier of said payment card corresponds to an expected identifier known by said terminal;
• means for executing a payment transaction whose amount is zero, comprising means for executing an online transaction, that is to say by requesting authorization from a server, in which the fourth bit of the fourth byte of the "Terminal Verification Results" of the EMV protocol is set to 1, in order to force an online transaction;
• means for issuing an identification assertion resulting in access to the good or the service.

6. Computer program product downloadable from a communication network and/or stored on a computer-readable medium and/or executable by a microprocessor, **characterized in that** it comprises program code instructions for implementing a method for identification according to claim 1, when it is executed on a computer.
